# EUROPÄISCHE PATENTSCHRIFT

(11) **EP 3 109 465 B1**
(45) Veröffentlichungstag und Bekanntmachung des Hinweises auf die Patenterteilung: **24.10.2018**
(21) Anmeldenummer: 15174151.9
(22) Anmeldetag: 26.06.2015
(51) Int. Cl.: F03D 80/40, F03D 1/06

(54) **WINDENERGIEANLAGENROTORBLATT MIT EINER ELEKTRISCHEN HEIZEINRICHTUNG**
WIND TURBINE ROTOR BLADE WITH AN ELECTRIC HEATING DEVICE
PALE DE ROTOR D'ÉOLIENNE DOTÉE D'UN DISPOSITIF DE CHAUFFAGE ELECTRIQUE

(43) Veröffentlichungstag der Anmeldung: 28.12.2016
(73) Patentinhaber: Nordex Energy GmbH, 22419 Hamburg (DE)
(72) Erfinder: Jacob, Danela, 22850 Norderstedt (DE); Sachse, Konrad, 21035 Hamburg (DE); Runge, Ines, 24558 Henstedt-Ulzburg (DE)
(74) Vertreter: Hauck Patentanwaltspartnerschaft mbB

(56) Entgegenhaltungen:
- EP-A1- 2 826 993
- WO-A1-2011/127997
- WO-A1-2012/164167
- CN-B- 101 886 617
- CN-B- 103 161 689

## Beschreibung

Die Erfindung betrifft ein Windenergieanlagenrotorblatt mit einer elektrischen Heizeinrichtung zur Beheizung eines Oberflächenbereichs des Windenergieanlagenrotorblatts und einem Temperatursensor. Durch Zufuhr elektrischer Energie zu der elektrischen Heizeinrichtung kann eine bestehende Vereisung des Rotorblatts abgebaut und/oder einer drohenden Vereisung vorgebeugt werden. Zur Steuerung der Energiezufuhr kann eine mit dem Windenergieanlagenrotorblatt ausgestattete Windenergieanlage eine Steuerung aufweisen, die mit dem Temperatursensor verbunden ist, so dass eine aktuelle Temperatur überwacht werden kann.

Aus der Druckschrift WO 2012/164167 A1 ist ein Windenergieanlagenrotorblatt mit einer elektrischen Heizeinrichtung bekannt geworden, die eine in Längsrichtung des Rotorblatts erstreckte Heizmatte aufweist, die über spezielle elektrische Verbindungen mit einem elektrischen Heizstrom versorgt wird, der in Längsrichtung des Rotorblatts durch die Heizmatte strömt.

Aus der Druckschrift EP 2 738 383 A1 ist ein Windenergieanlagenrotorblatt mit einem elektrischen Heizelement bekannt geworden, das ebenfalls eine in Längsrichtung durchströmte Heizmatte aufweist. Die Breite der Heizmatte variiert über deren Länge, um eine an den Heizleistungsbedarf angepasste Flächenleistung zu erzielen.

Aus der Druckschrift WO 2014/023734 A1 ist ein Windenergieanlagenrotorblatt mit einer elektrischen Heizeinrichtung bekannt geworden, die eine Vielzahl von sinus-, wellen- oder zickzackförmig verlaufenden Heizsträngen aufweist. Durch Variation einer Amplitude und/oder einer Wellenlänge der Heizstränge soll eine Flächenleistung der Heizvorrichtung abschnittsweise variiert werden können.

Aus der Druckschrift EP 2 843 228 A1 ist ein Windenergieanlagenrotorblatt mit einer elektrischen Heizeinrichtung bekannt geworden, dessen Heizelemente im Wesentlichen quer zu einer Längsrichtung des Rotorblatts von einem elektrischen Heizstrom durchströmt werden. Die Heizelemente weisen elektrisch leitfähige Faserbündel auf, deren Länge relativ zu einer Länge des betreffenden Heizelements durch unterschiedliche gekrümmte Anordnungen variiert werden kann, um eine Flächenleistung beeinflussen zu können.

Eine besondere Schwierigkeit beim Betrieb derartiger Heizeinrichtungen besteht darin, im gesamten relevanten Oberflächenbereich eine ausreichende Temperaturdifferenz zur Umgebung herzustellen, um den gewünschten Effekt zuverlässig zu erzielen, ohne dass es zu einem unangemessen hohen Energieverbrauch und/oder zu einer lokalen Überhitzung kommt. Steigt die Temperatur über einen bestimmten, von den verwendeten Materialien abhängigen Höchstwert, kann es schnell zu einer dauerhaften, eventuell irreparablen Schädigung des Rotorblatts kommen.

Bekannte elektrische Heizeinrichtungen für Windenergieanlagenrotorblätter begegnen dieser Schwierigkeit mit einer Vielzahl von Temperatursensoren, die in unterschiedlichen Bereichen der Heizeinrichtung angeordnet sind, um die Temperatur großflächig zu überwachen. Dabei wird in der Regel mindestens ein Temperatursensor nahe der Blattspitze angeordnet, wo wegen der besonders hohen Strömungsgeschwindigkeiten ein relativ großer Heizleistungsbedarf besteht und darum eine hohe Flächenleistung zur Verfügung steht, die mit einem besonders hohen Risiko einer Überhitzung einhergeht.

Die Anordnung von Temperatursensoren nahe der Blattspitze ist allerdings ebenfalls mit besonderen Nachteilen verbunden. Zum einen können die zum Betrieb des Temperatursensors erforderlichen, bis nahe an die Blattspitze heranreichenden elektrischen Leitungen das Risiko einer Schädigung des Rotorblatts durch einen Blitzschlag erhöhen und aufwendige Blitzschutzmaßnahmen erforderlich machen. Zum anderen ist der Bereich nahe der Blattspitze nach der Fertigung des Rotorblatts von innen nicht mehr zugänglich. Reparaturarbeiten können nur noch von außen vorgenommen werden, wozu spezielle Wartungsöffnungen im Rotorblatt geschaffen werden müssen. Jegliche Wartung oder Reparatur eines Temperatursensors nahe der Blattspitze ist daher mit sehr hohen Kosten verbunden.

Aus der Druckschrift EP 2 826 993 A1 ist ein Windenergieanlagenrotorblatt mit einem Enteisungssystem bekannt geworden, das eine Vielzahl getrennt voneinander ansteuerbarer Heizelemente aufweist. Die Heizelemente können jeweils einen Temperatursensor aufweisen, um einen zeitlichen Verlauf der Temperatur beim Aufheizen des jeweiligen Heizelements zu erfassen. Wird nur ein blattwurzelnahes Heizelement betrieben, entspricht das Rotorblatt den Merkmalen des Oberbegriffs des Anspruchs 1.

Aus den Druckschriften CN 101886617 B und CN 103161689 B sind weitere Windenergieanlagenrotorblätter mit mehreren Heizelementen und Temperatursensoren bekannt geworden.

Aus der Druckschrift WO 2011/127997 A1 ist ein Windenergieanlagenrotorblatt mit einer Heizmatte bekannt geworden, die in Längsrichtung des Rotorblatts durchströmt wird. Sie verläuft schlaufenförmig von der Blattwurzel zur Blattspitze und zurück.

Aus der Druckschrift EP 2 826 993 A1 ist ein Windenergieanlagenrotorblatt mit einem Enteisungssystem bekannt geworden, das eine Vielzahl getrennt voneinander ansteuerbarer Heizelemente aufweist. Die Heizelemente können jeweils einen Temperatursensor aufweisen, insbesondere um einen zeitlichen Verlauf der Temperatur beim Aufheizen des jeweiligen Heizelements zu erfassen. Wird nur ein blattwurzelnahes Heizelement betrieben, entspricht das Rotorblatt den Merkmalen des Oberbegriffs des Anspruchs 1.

Aus den Druckschriften CN 101886617 B und CN 103161689 B sind weitere Windenergieanlagenrotorblätter mit mehreren Heizelementen und Temperatursensoren bekannt geworden.

Aus der Druckschrift WO 2011/127997 A1 ist ein Windenergieanlagenrotorblatt mit einer Heizmatte bekannt geworden, die in Längsrichtung des Rotorblatts durchströmt wird. Sie verläuft schlaufenförmig von der Blattwurzel zur Blattspitze und zurück.

Davon ausgehend ist es die Aufgabe der Erfindung, ein Windenergieanlagenrotorblatt mit einer elektrischen Heizeinrichtung zur Verfügung zu stellen, das zuverlässig und sicher ohne einen Temperatursensor nahe der Blattspitze betrieben werden kann.

Diese Aufgabe wird gelöst durch das Windenergieanlagenrotorblatt mit den Merkmalen des Anspruchs 1. Vorteilhafte Ausgestaltungen sind in sich anschließenden Unteransprüchen angegeben.

Das Windenergieanlagenrotorblatt hat eine elektrische Heizeinrichtung zur Beheizung eines Oberflächenbereichs des Windenergieanlagenrotorblatts und einen Temperatursensor, wobei die elektrische Heizeinrichtung so ausgelegt ist, dass im Betrieb der Heizeinrichtung eine maximale Temperatur in einem blattwurzelnahen Abschnitt des Oberflächenbereichs, in dem der Temperatursensor angeordnet ist, erreicht wird.

Der beheizbare Oberflächenbereich kann sich über einen Teil der gesamten Oberfläche des Windenergieanlagenrotorblatts erstrecken, insbesondere über einen Längsabschnitt des Rotorblatts, der sich von einer mittleren Radiusposition bis nahe an eine Blattspitze heran oder bis zur Blattspitze hin erstreckt. Die mittlere Radiusposition kann in einem Abstand von einer Blattwurzel angeordnet sein, insbesondere in einem Bereich von etwa 30 % bis etwa 70 % eines Radius eines mit dem Windenergieanlagenrotorblatt ausgestatteten Rotors, wie üblich gemessen ausgehend von einer Drehachse des Rotors. Der beheizbare Oberflächenbereich kann insbesondere eine Profilnasenkante in dem betreffenden Längsabschnitt des Rotorblatts einschließen. Er kann sich von der Profilnasenkante in Strömungsrichtung nach hinten bis zur einer Profilendkante hin erstrecken oder in einem Abstand davon auf der Druckseite und auf der Saugseite enden, beispielsweise in einem Bereich zwischen 10% und 90% einer Profilsehne, gemessen von der Profilnasenkante aus.

Eine Energiezufuhr für die elektrische Heizeinrichtung kann mit einer Steuerung gesteuert werden, die zum Beispiel außerhalb des Windenergieanlagenrotorblatts angeordnet ist, etwa in einer Rotornabe oder einer Gondel einer mit dem Windenergieanlagenrotorblatt ausgestatteten Windenergieanlage. Die Steuerung kann im einfachsten Fall eine Möglichkeit zum Abschalten und Einschalten der Heizeinrichtung bieten. Ebenfalls möglich ist eine stufenlose oder eine mit zwei oder mehr Leistungsstufen versehene Steuerung oder Regelung der elektrischen Leistung. Der Temperatursensor wird mit der Steuerung verbunden, so dass die Energiezufuhr unter Berücksichtigung einer von dem Temperatursensor erfassten Temperatur gesteuert werden kann.

Bei der Erfindung ist der Temperatursensor in einem blattwurzelnahen Abschnitt des Oberflächenbereichs angeordnet. Damit ist ein Abschnitt gemeint, der sich in einem erheblichen Abstand von der Blattspitze bzw. von einem blattspitzenseitigen Ende des beheizbaren Oberflächenbereichs befindet. Der blattwurzelnahe Abschnitt kann einen Abstand sowohl von der Blattwurzel als auch von einem blattwurzelseitigen Ende des beheizbaren Oberflächenbereichs aufweisen. Er befindet sich jedoch so nahe an der Blattwurzel, dass gegebenenfalls erforderliche Wartungsarbeiten im Bereich des Temperatursensors einfacher möglich sind als bei der üblichen Anordnung eines Temperatursensors nahe der Blattspitze.

In dem blattwurzelnahen Abschnitt können wahlweise auch mehrere Temperatursensoren angeordnet sein, insbesondere um bei einer Störung eines Temperatursensors weiterhin aussagekräftige Daten zu erhalten. Außerhalb des blattwurzelnahen Abschnitts, insbesondere in einem Bereich nahe der Blattspitze, weist das Windenergieanlagenrotorblatt bevorzugt keinen Temperatursensor auf.

Bei der Erfindung ist die elektrische Heizeinrichtung so ausgelegt, dass im Betrieb der Heizeinrichtung eine maximale Temperatur in dem blattwurzelnahen Abschnitt des Oberflächenbereichs erreicht wird. Welche Temperaturverteilung sich im Betrieb des Windenergieanlagenrotorblatts in dem beheizbaren Oberflächenbereich einstellt, ist von mehreren Einflussfaktoren abhängig. Maßgeblich sind die lokale Wärmezufuhr durch die elektrische Heizeinrichtung, die von der Flächenleistung der Heizeinrichtung, also von der in dem betreffenden Bereich pro Flächeneinheit abgegeben thermischen Leistung oder aufgenommenen elektrischen Leistung, sowie die lokale Wärmeabfuhr, die von den lokalen Strömungsverhältnissen, insbesondere der Anströmgeschwindigkeit der Umgebungsluft, und von der Wärmeleitfähigkeit und Wärmekapazität des Rotorblatts selbst abhängig ist. Diese Einflussfaktoren können rechnerisch oder experimentell ermittelt und bei der Auslegung der elektrischen Heizeinrichtung berücksichtigt werden.

In der Regel wird grundsätzlich eine möglichst gleichmäßige Temperatur in dem beheizbaren Oberflächenbereich angestrebt und das Leistungsvermögen der Heizeinrichtung so gewählt, dass überall eine gewünschte Temperaturdifferenz zur Umgebung erreicht werden kann. Abweichungen von diesem Ideal sind in der Praxis kaum zu vermeiden. Sie resultieren einerseits aus einer unvollständigen und/oder mit Ungenauigkeiten behafteten Berücksichtigung der genannten Einflussfaktoren, andererseits aus Fertigungstoleranzen und dynamischen Effekten vor Erreichen eines thermischen Gleichgewichts.

Die Erfinder haben erkannt, dass die für einen zuverlässigen und sicheren Betrieb der elektrischen Heizeinrichtung erforderliche Temperaturüberwachung wesentlich vereinfacht werden kann, wenn bei der Auslegung der elektrischen Heizeinrichtung ein blattwurzelnaher Abschnitt des Oberflächenbereichs festgelegt wird, in dem eine maximale Temperatur erreicht werden soll. Wird der Temperatursensor dann in diesem Abschnitt angeordnet, kann eine Überhitzung in dem gesamten beheizbaren Oberflächenbereich vermieden werden.

Bei der Auslegung der elektrischen Heizeinrichtung kann die Flächenleistung in dem blattwurzelnahen Abschnitt so bemessen werden, dass die dort erreichbare Temperaturdifferenz zur Umgebung um beispielsweise mindestens 0,5 K, 1 K, 2 K oder 5 K höher liegt als in an den blattwurzelnahen Abschnitt angrenzenden Abschnitten des Oberflächenbereichs. Die hierfür erforderliche Flächenleistung kann rechnerisch oder experimentell ermittelt werden.

Bei der Erfindung weist die elektrische Heizeinrichtung eine Heizmatte aus einem elektrisch leitfähigen Material, einen blattwurzelseitigen elektrischen Anschluss an einem blattwurzelseitigen Ende der Heizmatte und einen blattspitzenseitigen elektrischen Anschluss an einem blattspitzenseitigen Ende der Heizmatte auf, so dass ein elektrischer Heizstrom im Wesentlichen in einer Längsrichtung des Windenergieanlagenrotorblatts fließt. Die Heizmatte weist ein elektrisch leitfähiges Material auf, zum Beispiel ein Gelege oder Gewebe aus einem elektrisch leitfähigen Fasermaterial, insbesondere aus Kohlenstofffasern. Wegen der genannten Anordnung der elektrischen Anschlüsse strömt der Heizstrom im Wesentlichen in Längsrichtung durch die gesamte Heizmatte, so dass durch jeden Längsabschnitt in der Heizmatte der gleiche Strom fließt. Die insgesamt von der Heizmatte zur Verfügung gestellte Heizleistung wird durch die elektrischen Eigenschaften der Heizmatte und durch die Energiezufuhr bestimmt. Die in einem
bestimmten Längsabschnitt der Heizmatte wirksame Heizleistung hängt von dem Heizstrom und von dem über den betreffenden Längsabschnitt auftretenden Spannungsabfall ab. Weist der betreffende Längsabschnitt einen relativ (d.h. insbesondere im Vergleich zu anderen Längsabschnitten der Heizmatte) hohen elektrischen Widerstand auf, erhöht sich der Spannungsabfall und damit die Heizleistung. Dies kann zu einer erhöhten Flächenleistung in dem betreffenden Längsabschnitt führen. Ebenfalls einen Einfluss auf die Flächenleistung hat, welche Breite die Heizmatte in dem Längsabschnitt aufweist. Es ist daher möglich, die Flächenleistung der Heizmatte so zu variieren, dass in dem blattwurzelnahen Abschnitt ein Bereich maximaler Temperatur, bezogen auf die gesamte Heizmatte, geschaffen wird.

Bei der Erfindung weist die Heizmatte einen äußeren Längsabschnitt, der sich von dem blattspitzenseitigen Ende der Heizmatte bis zu einer ersten mittleren Radiusposition erstreckt, und einen inneren Längsabschnitt, der sich von einer zweiten mittleren Radiusposition bis zu dem blattwurzelseitigen Ende der Heizmatte erstreckt, auf, wobei der blattwurzelnahe Abschnitt in dem inneren Längsabschnitt angeordnet ist. Der Begriff Radiusposition bezieht sich wie üblich auf den Abstand von der Drehachse eines mit dem Windenergieanlagenrotorblatt ausgestatteten Rotors. Der innere und der äußere Längsabschnitt können unmittelbar aneinander angrenzen. In diesem Fall fallen die erste mittlere Radiusposition und die zweite mittlere Radiusposition zusammen. Sie können jedoch auch in einem Abstand voneinander angeordnet sein; in diesem Fall ist die erste mittlere Radiusposition näher an der Blattspitze angeordnet als die zweite mittlere Radiusposition und die Heizmatte weist zwischen den beiden Radiuspositionen einen Übergangsabschnitt auf. Innerer und äußerer Längsabschnitt können mit unterschiedlichen elektrischen Eigenschaften oder mit einer unterschiedlichen Anordnung versehen sein, um die Flächenleistung der Heizmatte an den Heizleistungsbedarf anzupassen und sicherzustellen, dass die maximale Temperatur in dem blattwurzelnahen Abschnitt erreicht wird. Der blattwurzelnahe Abschnitt ist in dem inneren Längsabschnitt angeordnet. Er kann sich über den gesamten inneren Längsabschnitt erstrecken oder nur über einen Teil davon.

Bei der Erfindung weist der innere Längsabschnitt eine geringere Breite auf als der äußere Längsabschnitt. Durch die geringere Breite weist der innere Längsabschnitt einen größeren elektrischen Widerstand pro Länge auf, wodurch sich die Flächenleistung in dem inneren Längsabschnitt gegenüber dem äußeren Längsabschnitt erhöht. Dies kann dazu beitragen, dass die maximale Temperatur in dem blattwurzelnahen Abschnitt innerhalb des inneren Längsabschnitts erreicht wird. Ebenfalls möglich ist eine Anordnung des inneren Längsabschnitts der Heizmatte bei unverändertem Gesamtquerschnitt über eine geringere Breite. In diesem Fall erhöht sich ebenfalls die Flächenleistung in dem inneren Längsabschnitt, jedoch nicht auf Grund eines größeren elektrischen Widerstands, sondern auf Grund einer Verringerung der Fläche, innerhalb der die Heizleistung abgegeben wird.

In einer Ausgestaltung weist der äußere Längsabschnitt eine gleichmäßige Breite auf. Die von der Heizmatte zur Verfügung gestellte Flächenleistung ist daher über den äußeren Längsabschnitt im Wesentlichen konstant.

In einer Ausgestaltung ist der äußere Längsabschnitt trapezförmig. Insbesondere kann sich eine Breite des äußeren Längsabschnitts in Richtung zur Blattspitze hin verringern. Dadurch steigen der elektrische Widerstand, der Spannungsabfall und die elektrische Heizleistung in Richtung zur Blattspitze hin an, was zu einer Anpassung an den Heizleistungsbedarf führt.

In einer Ausgestaltung weist der innere Längsabschnitt eine Länge im Bereich von 0,5 m bis 5 m auf. Dieser Längenbereich führt einerseits zur Ausbildung einer aussagekräftigen Temperatur in dem inneren Längsabschnitt, andererseits wird ein unnötig hoher Energiebedarf durch Erzeugen einer maximalen Temperatur über eine unnötig große Fläche vermieden.

In einer Ausgestaltung weist der innere Längsabschnitt eine gleichmäßige Breite auf. Dies kann zur Ausbildung einer gleichmäßigen, maximalen Temperatur in dem blattwurzelnahen Abschnitt beitragen.

In einer Ausgestaltung weist die elektrische Heizeinrichtung zwei der Heizmatten auf, die so angeordnet sind, dass sie einander in einem entlang einer Profilnasenkante des Windenergieanlagenrotorblatts verlaufenden Überlappungsbereich überlappen. Ein solcher Überlappungsbereich kann mit genau zwei Heizmatten erzeugt werden, aber auch mit einer geeigneten Kombination von drei oder mehr Heizmatten, die sich zumindest teilweise im Bereich der Profilnasenkante überlappen. In dem Überlappungsbereich addieren sich die Flächenleistungen der beiden Heizmatten, so dass die Heizleistung im Bereich der Profilnasenkante bedarfsgerecht erhöht wird.

In einer Ausgestaltung ist der blattwurzelnahe Abschnitt in dem Überlappungsbereich angeordnet. Er liegt damit auch bei einer überlappenden Anordnung in einem Bereich, in dem eine maximale Temperatur erreicht wird.

In einer Ausgestaltung nimmt eine senkrecht zur einer Längsachse des Rotorblatts gemessene Breite des Überlappungsbereichs zur Blattspitze hin zu. Durch diese Maßnahme wird die Heizleistung der beiden Heizmatten in Richtung zur Blattspitze hin auf eine kleinere Fläche konzentriert, was dem zur Blattspitze hin zunehmenden Heizleistungsbedarf gerecht wird.

Nachfolgend wird die Erfindung anhand eines in zwei Figuren dargestellten Ausführungsbeispiels näher erläutert. Es zeigen:
- Fig. 1: ein erfindungsgemäßes Windenergieanlagenrotorblatt in einer schematischen, perspektivischen Darstellung,
- Fig. 2: die elektrische Heizeinrichtung des Windenergieanlagenrotorblatts aus Figur 1 in einer schematischen Darstellung.

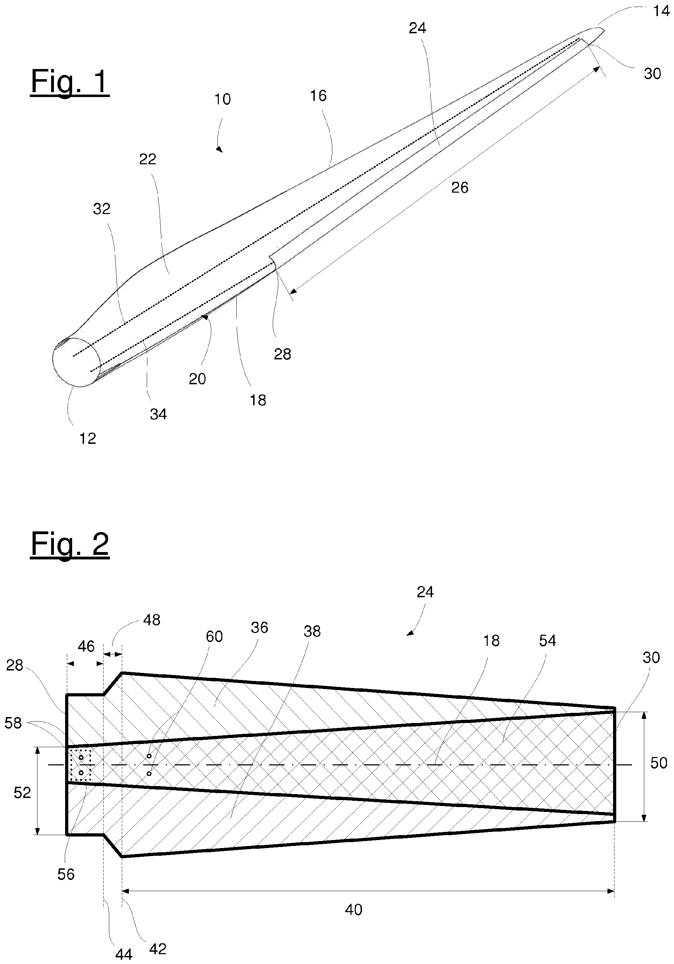

Das Windenergieanlagenrotorblatt 10 aus Figur 1 umfasst eine Blattwurzel 12, eine Blattspitze 14, eine Profilendkante 16, eine Profilnasenkante 18, eine Saugseite 20 und eine Druckseite 22. Es weist außerdem eine elektrische Heizeinrichtung 24 auf, die sich über einen Längsabschnitt 26, der von einem blattwurzelseitigen Ende 28 bis zu einem blattspitzenseitigem Ende 30 reicht, erstreckt. Das blattspitzenseitige Ende 30 ist nahe der Blattspitze 14 angeordnet. Das blattwurzelseitige Ende 28 befindet sich in einem Abstand von der Blattwurzel 12, der beispielsweise in einem Bereich von 30% bis 70% einer Gesamtlänge des Windenergieanlagenrotorblatts 10 liegt.

Die elektrische Heizeinrichtung 24 besteht aus zwei Heizmatten 36, 38 (siehe Figur 2) aus einem elektrisch leitfähigen Material, die mit einem am blattwurzelseitigen Ende 28 angeordneten elektrischen Anschluss mit einer ersten Versorgungsleitung 34 und mit einem an dem blattspitzenseitigen Ende 30 angeordneten elektrischen Anschluss mit einer zweiten Versorgungsleitung 32 verbunden sind. Die Energiezufuhr zu der elektrischen Heizeinrichtung erfolgt über die beiden Versorgungsleitungen 32, 34 und bewirkt einen Stromfluss durch die elektrische Heizeinrichtung 24 im Wesentlichen in einer Längsrichtung des Windenergieanlagenrotorblatts 10.

Einzelheiten der elektrischen Heizeinrichtung 24 sind besser in der Figur 2 erkennbar, die eine schematische Darstellung der elektrischen Heizeinrichtung 24 mit Blick auf die strichpunktiert eingezeichnete Profilnasenkante 18 zeigt. Die elektrische Heizeinrichtung 24 weist eine erste Heizmatte 36 und eine zweite Heizmatte 38 auf, die anhand ihrer unterschiedlich ausgerichteten Schraffierungen unterschieden werden können. Die beiden Heizmatten 36, 38 erstrecken sich jeweils von einem blattwurzelseitigen Ende 28 bis zu einem blattspitzenseitigen Ende 30.

Jede der beiden Heizmatten 36, 38 weist drei unterschiedliche Längsabschnitte auf: Ein äußerer Längsabschnitt 40 erstreckt sich von dem blattspitzenseitigen Ende 30 bis zu einer ersten mittleren Radiusposition 42. Der äußere Längsabschnitt 40 weist eine über seine gesamte Länge gleichmäßige, erste Breite 50 auf.

Ein innerer Längsabschnitt 46 erstreckt sich von einer zweiten mittleren Radiusposition 44 bis zu dem blattwurzelseitigen Ende 28. Er weist eine gleichmäßige, zweite Breite 52 auf, die geringer ist als die erste Breite 50. Die erste mittlere Radiusposition 42 ist näher an dem blattspitzenseitigen Ende 30 angeordnet als die zweite mittlere Radiusposition 44. Zwischen den beiden mittleren Radiuspositionen erstreckt sich ein Übergangsabschnitt 48, indem die Breite jeder der beiden Heizmatten 36, 38 von der erste Breite 50 auf die zweite Breite 52 abnimmt.

In einem Überlappungsbereich 54, der sich über die gesamte Länge der beiden Heizmatten 36, 38 erstreckt und entlang der Profilnasenkante 18 verläuft, sind die erste Heizmatte 36 und die zweite Heizmatte 38 einander überlappend angeordnet.

Die Breite dieses Überlappungsbereichs 50 nimmt vom blattwurzelseitigen Ende 28 zum blattspitzenseitigen Ende 30 hin kontinuierlich zu.

Beide Heizmatten 36, 38 besitzen einen inneren Längsabschnitt 46, welcher eine zweite Breite 52 aufweist, die geringer als die erste Breite 50 ist. Die spezifische Flächenheizleistung im inneren Längsabschnitt 46 ist somit höher als im äußeren Längsabschnitt 40. Innerhalb der beiden inneren Längsabschnitte 46 und innerhalb des Überlappungsbereichs 54 ist ein blattwurzelnaher Abschnitt 56 des beheizbaren Oberflächenbereichs ausgebildet, indem eine maximale Temperatur erreicht wird. In diesem blattwurzelnahen Abschnitt 56 sind zwei durch kleine Kreise angedeutete Temperatursensoren 58 angeordnet, die zur Überwachung der dort auftretenden, maximalen Temperatur dienen. Zwei Temperaturrelais 60 befinden sich im Bereich der äußeren Längsabschnitte 40 ebenfalls innerhalb des Überlappungsbereichs 54 und bieten einen zusätzlichen Schutz vor einer Überhitzung. Sie sind in einem erheblichen Abstand von der Blattspitze angeordnet.

### Liste der verwendeten Bezugszeichen:

- 10: Windenergieanlagenrotorblatt
- 12: Blattwurzel
- 14: Blattspitze
- 16: Profilendkante
- 18: Profilnasenkante
- 20: Saugseite
- 22: Druckseite
- 24: elektrische Heizeinrichtung
- 26: Längsabschnitt
- 28: blattwurzelseitiges Ende
- 30: blattspitzenseitiges Ende
- 32: Versorgungsleitung blattspitzenseitiger Anschluss
- 34: Versorgungsleitung blattwurzelseitiger Anschluss
- 36: erste Heizmatte
- 38: zweite Heizmatte
- 40: äußerer Längsabschnitt
- 42: erste mittlere Radiusposition
- 44: zweite mittlere Radiusposition
- 46: innerer Längsabschnitt
- 48: Übergangsabschnitt
- 50: erste Breite
- 52: zweite Breite
- 54: Überlappungsbereich
- 56: blattwurzelnaher Abschnitt
- 58: Temperatursensor
- 60: Temperaturrelais

## Patentansprüche

1. Windenergieanlagenrotorblatt (10) mit einer elektrischen Heizeinrichtung (24) zur Beheizung eines Oberflächenbereichs des Windenergieanlagenrotorblatts (10) und einem Temperatursensor (58), wobei die elektrische Heizeinrichtung (24) eine Heizmatte (36, 38) aus einem elektrisch leitfähigen Material aufweist und so ausgelegt ist, dass im Betrieb der elektrischen Heizeinrichtung (24) eine maximale Temperatur in einem blattwurzelnahen Abschnitt (56) des Oberflächenbereichs erreicht wird, in dem der Temperatursensor (58) angeordnet ist, **dadurch gekennzeichnet, dass** die elektrische Heizeinrichtung (24) einen elektrischen Anschluss an einem blattwurzelseitigen Ende (28) der Heizmatte (36, 38) und einen elektrischen Anschluss an einem blattspitzenseitigen Ende (30) der Heizmatte (36, 38) aufweist, so dass ein elektrischer Heizstrom im Wesentlichen in einer Längsrichtung des Windenergieanlagenrotorblatts (10) fließt, die Heizmatte (36, 38) einen äußeren Längsabschnitt (40), der sich von dem blattspitzenseitigen Ende (30) der Heizmatte (36, 38) bis zu einer ersten mittleren Radiusposition (42) erstreckt, und einen inneren Längsabschnitt (46), der sich von einer zweiten mittleren Radiusposition (44) bis zu dem blattwurzelseitigen Ende (28) der Heizmatte (36, 38) erstreckt, aufweist, wobei der blattwurzelnahe Abschnitt (56) in dem inneren Längsabschnitt (46) angeordnet ist und der innere Längsabschnitt (46) eine geringere Breite aufweist als der äußere Längsabschnitt (40).

2. Windenergieanlagenrotorblatt (10) nach Anspruch 1, **dadurch gekennzeichnet, dass** der äußere Längsabschnitt (40) eine gleichmäßige Breite aufweist.

3. Windenergieanlagenrotorblatt (10) nach Anspruch 1, **dadurch gekennzeichnet, dass** der äußere Längsabschnitt (40) trapezförmig ist.

4. Windenergieanlagenrotorblatt (10) nach einem der Ansprüche 1 bis 3, **dadurch gekennzeichnet, dass** der innere Längsabschnitt (46) eine Länge im Bereich von 0,5 m bis 5 m aufweist.

5. Windenergieanlagenrotorblatt (10) nach einem der Ansprüche 1 bis 4, **dadurch gekennzeichnet, dass** der innere Längsabschnitt (46) eine gleichmäßige Breite aufweist.

6. Windenergieanlagenrotorblatt (10) nach einem der Ansprüche 1 bis 5, **dadurch gekennzeichnet, dass** die elektrische Heizeinrichtung (24) zwei der Heizmatten (36, 38) aufweist, die so angeordnet sind, dass sie einander in einem entlang einer Profilnasenkante (18) des Windenergieanlagenrotorblatts (10) verlaufenden Überlappungsbereich (54) überlappen.

7. Windenergieanlagenrotorblatt (10) nach Anspruch 6, **dadurch gekennzeichnet, dass** der blattwurzelnahe Abschnitt (56) in dem Überlappungsbereich (54) angeordnet ist.

8. Windenergieanlagenrotorblatt (10) nach Anspruch 6 oder 7, **dadurch gekennzeichnet, dass** eine senkrecht zu einer Längsachse des Windenergieanlagenrotorblatts (10) gemessene Breite des Überlappungsbereichs (54) zur Blattspitze (14) hin zunimmt.

9. Windenergieanlagenrotorblatt (10) nach einem der Ansprüche 1 bis 8, **dadurch gekennzeichnet, dass** der beheizbare Oberflächenbereich ein blattwurzelseitiges Ende und ein blattspitzenseitiges Ende aufweist und der blattwurzelnahe Abschnitt (56) näher an dem blattwurzelseitigen Ende als an dem blattspitzenseitigen Ende angeordnet ist.

10. Windenergieanlagenrotorblatt (10) nach einem der Ansprüche 1 bis 9, **dadurch gekennzeichnet, dass** eine Flächenleistung der elektrischen Heizeinrichtung (24) in dem blattwurzelnahen Abschnitt (56) genauso groß ist wie oder größer ist als in einem blattspitzennahen Abschnitt.

11. Windenergieanlagenrotorblatt (10) nach einem der Ansprüche 1 bis 10, **dadurch gekennzeichnet, dass** eine Flächenleistung der elektrischen Heizeinrichtung (24) in dem blattwurzelnahen Abschnitt (56) ein lokales und/oder absolutes Maximum erreicht.

## Claims

1. A wind turbine rotor blade (10) with an electrical heating device (24) for heating a surface region of the wind turbine rotor blade (10) and a temperature sensor (58), wherein the electrical heating device (24) has a heating mat (36, 38) consisting of an electrically conductive material, and is designed that way that during operation of the heating device (24) a maximum temperature is achieved in a section (56) of the surface region close to the blade root in which the temperature sensor (58) is arranged, **characterized in that** the electrical heating device (24) has an electrical connection to a blade-root-side end (28) of the heating mat (36, 38), and an electrical connection to a blade-tip-side end (30) of the heating mat (36, 38) so that an electrical heating current basically flows in a longitudinal direction of the wind turbine rotor blade (10), the heating mat (36, 38) has an outer longitudinal section (40) that extends from the blade-tip-side end (30) of the heating mat (36, 38) to a first middle radial position (42), and an inner longitudinal section (46) that extends from a second middle radial position (44) to the blade-root-side end (28) of the heating mat (36, 38), wherein the section (56) close to the blade root is arranged in the inner longitudinal section (46) and the inner longitudinal section (46) has a smaller width than the outer longitudinal section (40).

2. The wind turbine rotor blade (10) according to claim 1, **characterized in that** the outer longitudinal section (40) has a uniform width.

3. The wind turbine rotor blade (10) according to claim 1, **characterized in that** the outer longitudinal section (40) is trapezoidal.

4. The wind turbine rotor blade (10) according to one of claims 1 to 3, **characterized in that** the inner longitudinal section (46) has a length within a range of 0.5 m to 5 m.

5. The wind turbine rotor blade (10) according to one of claims 1 to 4, **characterized in that** the inner longitudinal section (46) has a uniform width.

6. The wind turbine rotor blade (10) according to one of claims 1 to 5, **characterized in that** the electrical heating device (24) has two of the heating mats (36, 38) which are arranged so that they overlap each other in an overlapping region (54) running along an airfoil leading edge (18) of the wind turbine rotor blade (10).

7. The wind turbine rotor blade (10) according to claim 6, **characterized in that** the section (56) close to the blade root is arranged in the overlapping region (54).

8. The wind turbine rotor blade (10) according to one of the claims 6 or 7, **characterized in that** a width of the overlapping region (54) perpendicular to a longitudinal axis of the rotor blade (10) increases toward the blade tip (14).

9. The wind turbine rotor blade (10) according to one of claims 1 to 8, **characterized in that** the heatable surface region has a blade-root-side end and a blade-tip-side end, and the section (56) close to the blade root is arranged closer to the blade-root-side end than the blade-tip-side end.

10. The wind turbine rotor blade (10) according to one of claims 1 to 9, **characterized in that** an area output of the electrical heating device (24) in the section (56) close to the blade root is just as large or larger than in a section close to the blade tip.

11. The wind turbine rotor blade (10) according to one of claims 1 to 10, **characterized in that** an area output of the electrical heating device (24) in the section (56) close to the blade root reaches a local and/or absolute maximum.

## Revendications

1. Pale de rotor d'éolienne (10) dotée d'un dispositif de chauffage électrique (24) pour chauffer une zone de la surface de la pale de rotor d'éolienne (10) et d'un capteur de température (58), dans laquelle le dispositif de chauffage électrique (24) présente une natte chauffante (36, 38) constituée d'un matériau électriquement conducteur et conçue de telle façon qu'une température maximale est atteinte pendant le fonctionnement du dispositif de chauffage (24) dans une section proche de la base de pale (56) de la zone de la surface, dans laquelle le capteur de température (58) est disposé, **caractérisée en ce que** le dispositif de chauffage électrique (24) présente une connexion électrique à une extrémité tournée vers la base de pale (28) de la natte chauffante (36, 38) et une connexion électrique à une extrémité tournée vers la pointe de pale (30) de la natte chauffante (36, 38), si bien qu'un courant électrique de chauffage circule essentiellement dans un sens longitudinal de la pale de rotor d'éolienne (10), la natte chauffante (36, 38) présente une section longitudinale extérieure (40) s'étendant de l'extrémité tournée vers la pointe de pale (30) de la natte chauffante (36, 38) jusqu'à une première position médiane du rayon (42) et une section longitudinale intérieure (46) s'étendant d'une seconde position médiane du rayon (44) jusqu'à l'extrémité tournée vers la base de pale (28) de la natte chauffante (36, 38), dans laquelle la section proche de la base de pale (56) est disposée dans la section longitudinale intérieure (46) et la section longitudinale intérieure (46) présente une largeur inférieure à celle de la section longitudinale extérieure (40).

2. Pale de rotor d'éolienne (10) selon la revendication 1, **caractérisée en ce que** la section longitudinale extérieure (40) présente une largeur régulière.

3. Pale de rotor d'éolienne (10) selon la revendication 1, **caractérisée en ce que** la section longitudinale extérieure (40) est trapézoïdale.

4. Pale de rotor d'éolienne (10) selon l'une des revendications 1 à 3, **caractérisée en ce que** la section longitudinale intérieure (46) présente une longueur se situant dans la plage de 0,5 m à 5 m.

5. Pale de rotor d'éolienne (10) selon l'une des revendications 1 à 4, **caractérisée en ce que** la section longitudinale intérieure (46) présente une largeur régulière.

6. Pale de rotor d'éolienne (10) selon l'une des revendications 1 à 5, **caractérisée en ce que** le dispositif de chauffage électrique (24) présente deux des nattes chauffantes (36, 38), qui sont disposées de façon à ce qu'elles se chevauchent l'une l'autre dans une zone de chevauchement (54) évoluant le long d'un bord d'attaque du profilé (18) de la pale de rotor d'éolienne (10).

7. Pale de rotor d'éolienne (10) selon la revendication 6, **caractérisée en ce que** la section proche de la base de pale (56) est disposée dans la zone de chevauchement (54).

8. Pale de rotor d'éolienne (10) selon la revendication 6 ou 7, **caractérisée en ce qu'**une largeur de la zone de chevauchement (54) mesurée à la perpendiculaire d'un axe longitudinal de la pale de rotor d'éolienne (10) augmente vers la pointe de la pale (14).

9. Pale de rotor d'éolienne (10) selon l'une des revendications 1 à 8, **caractérisée en ce que** la zone de la surface chauffable présente une extrémité tournée vers la base de pale ainsi qu'une extrémité tournée vers la pointe de pale et que la section proche de la base de pale (56) est disposée plus près de l'extrémité tournée vers la base de pale que de l'extrémité tournée vers la pointe de pale.

10. Pale de rotor d'éolienne (10) selon l'une des revendications 1 à 9, **caractérisée en ce qu'**un rendement surfacique du dispositif de chauffage électrique (24) est aussi élevé ou plus élevé dans la section proche de la base de pale (56) que dans une section proche de la pointe de pale.

11. Pale de rotor d'éolienne (10) selon l'une des revendications 1 à 10, **caractérisée en ce qu'**un rendement surfacique du dispositif de chauffage électrique (24) atteint une valeur maximale locale et/ou absolue dans la section proche de la base de pale (56).
